Europäisches Patentamt

European Patent Office

Office européen des brevets

(11) Numéro de publication: **0 314 564**
**A1**

## DEMANDE DE BREVET EUROPEEN

(21) Numéro de dépôt: **88402687.3**

(22) Date de dépôt: **25.10.88**

(51) Int. Cl.⁴: **B 25 J 15/00**

(30) Priorité: **27.10.87 FR 8714836**

(43) Date de publication de la demande:
**03.05.89 Bulletin 89/18**

(84) Etats contractants désignés: **BE DE GB IT**

(71) Demandeur: **COMMISSARIAT A L'ENERGIE ATOMIQUE**
**31/33, rue de la Fédération**
**F-75015 Paris (FR)**

(72) Inventeur: **Brugere, Robert**
**Hameau de la Gare - Montboucher**
**F-26740 Sauzet (FR)**

**Faure, Robert**
**Sacle Nord - Bât. 16-4**
**F-26700 Pierrelatte (FR)**

**Galmard, Yves**
**425 rue des Jonquilles**
**F-84100 Orange (FR)**

**Gerenton, Jacques**
**La Laupie 83-12**
**F-07700 Bourg Saint Andeol (FR)**

(74) Mandataire: **Mongrédien, André et al**
**c/o BREVATOME 25, rue de Ponthieu**
**F-75008 Paris (FR)**

(54) Outil de préhension notamment pour une fiche de connecteur de câble par télémanipulation.

(57) Outil de préhension (20), notamment pour la télémanipulation de fiches de raccordement.

Les mors (3) d'une pince (1) télémanipulée serrent des étriers (31). Un mécanisme intermédiaire (35) assure le rapprochement de deux parties de serrage (22) et (27) qui permettent d'assurer une préhension solide et dans de bonnes conditions d'une fiche (10). Les efforts à exercer pour l'enfichage sont moins importants et sont mieux transmis.

Application aux industries nucléaires ou spatiales.

FIG. 1

EP 0 314 564 A1

**Description**

## OUTIL DE PREHENSION NOTAMMENT POUR UNE FICHE DE CONNECTEUR DE CABLE PAR TELEMANIPULATION

La présente invention concerne un outil de préhension pour une piéce présentant une surface de préhension circonférentielle limitée par un épaulement, et qui peut être notamment une fiche de connecteur de câble. L'invention est plus spécialement intéressante dans le domaine de la télémanipulation.

Un connecteur se compose généralement de deux parties : une embase fixe, fixée par exemple dans un mur, et une fiche mobile qui termine un câble de raccordement. Un système de verrouillage est en outre souvent prévu sur la fiche : il peut consister en un système vissant, à baïonnette ou enclenché par simple mouvement de translation axiale, comprenant par exemple des cliquets rétractables.

Dans le cas de la télémanipulation, le problème majeur qui se pose est d'obtenir une bonne préhension de la fiche. Dans les systèmes les plus simples, les fiches sont en effet simplement pourvues d'une surface de préhension circonférentielle qui est saisie entre les mors de la pince du télémanipulateur. La pince s'étend alors à peu prés perpendiculairement à la fiche, et cette disposition n'est pas heureuse. En effet, le détrompage de la fiche, c'est-à-dire son positionnement angulaire correct en face de l'embase, nécessite des manoeuvres compliquées de la part de la pince ; la pince est encore mal placée pour effectuer l'effort axial d'enfoncement, qui se transmet par des forces de frottement entre la surface de préhension et les mors et qui nécessite donc un serrage important. Enfin, la pince vient à être plaquée contre la paroi où se trouve l'embase, ce qui peut être rendu impossible si l'on se trouve dans un recoin ou parmi d'autres fiches déjà installées. Par ailleurs, la surface de préhension est souvent mal prise par les mors, ce qui fait que la fiche tourne au cours de la manipulation et n'est donc pas portée exactement en face de l'embase. Ceci implique des manoeuvres supplémentaires de correction de pointage.

L'invention permet d'éviter ces inconvénients en fournissant un outil de préhension entre la pince du télémanipulateur et la pièce à enficher qui autorise à la fois une bonne préhension de cette dernière et un enfichage par des efforts à peu près uniquement longitudinaux, c'est-à-dire plus efficaces. Une moins grande puissance est donc requise chez le télémanipulateur et, de plus, l'outil de préhension permet de dégager quelque peu la pièce du télémanipulateur et donc de pouvoir accepter des contraintes d'encombrement plus sévères.

Plus spécialement, l'invention concern un outil de préhension d'une pièce présentant une surface de préhension circonférentielle limitée par un épaulement, notamment pour une fiche de connecteur de câble, caractérisé en ce qu'il comprend une fourche venant coiffer la surface de préhension, un appendice venant en face d'une portée de la pièce, un corps cylindrique le long duquel coulisse l'appendice, deux étriers disposés latéralement de part et d'autre du corps, et deux mécanismes reliant l'appendice et le corps aux deux étriers, ces mécanismes permettant, sous l'action d'un moyen tel qu'une pince de télémanipulateur appuyant sur les deux étriers, de rapprocher lesdits étriers tout en faisant coulisser l'appendice sur le corps, et jusqu'à ce que l'appendice atteigne la portée de la pièce et la repousse, puis que l'épaulement soit porté contre la fourche, la pièce étant alors serrée entre ladite fourche et l'appendice.

Dans une réalisation équivalente, les rôles de la fourche et de l'appendice sont intervertis, si bien que l'outil de préhension comprend alors une fourche venant coiffer la surface de préhension, un appendice venant en face d'une portée de la pièce, un corps cylindrique le long duquel coulisse la fourche, deux étriers disposés latéralement de part et d'autre du corps, et deux mécanismes reliant la fourche et le corps aux deux étriers, ces mécanismes permettant, sous l'action d'un moyen tel qu'une pince de télémanipulateur appuyant sur les deux étriers, de rapprocher lesdits étriers tout en faisant coulisser la fourche sur le corps, et jusqu'à ce que la fourche atteigne l'épaulement et le repousse, puis que la portée de la pièce soit portée contre l'appendice, la pièce étant alors serrée entre la fourche et l'appendice.

Avantageusement, l'appendice peut consister en un crochet qui vient soutenir le câble fixé à l'arrière de la fiche, et les mécanismes de liaison peuvent être munis d'un moyen de rappel permettant de les ramener dans un état où les étriers sont écartés et où la pièce est desserrée.

On va à présent décrire l'invention plus en détail à l'aide des figures annexées dont l'énumération suit et qui sont données à titre illustratif et non limitatif :
- la figure 1 est une vue de dessus d'une réalisation de l'invention,
- la figure 2A est une vue de côté de cette même réalisation,
- la figure 2B est un détail de cette réalisation,
- les figures 3A et 3B sont une vue de dessus et une vue de coté d'une deuxième réalisation équivalente de l'invention, et
- les figures 4A et 4B sont une vue de dessus et une vue de coté d'une troisième réalisation équivalente.

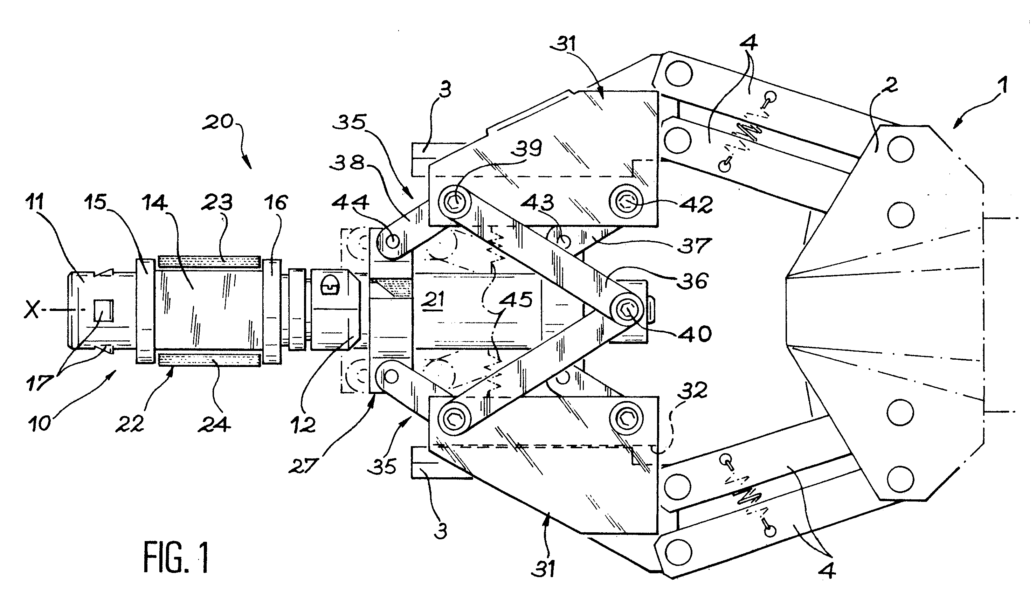

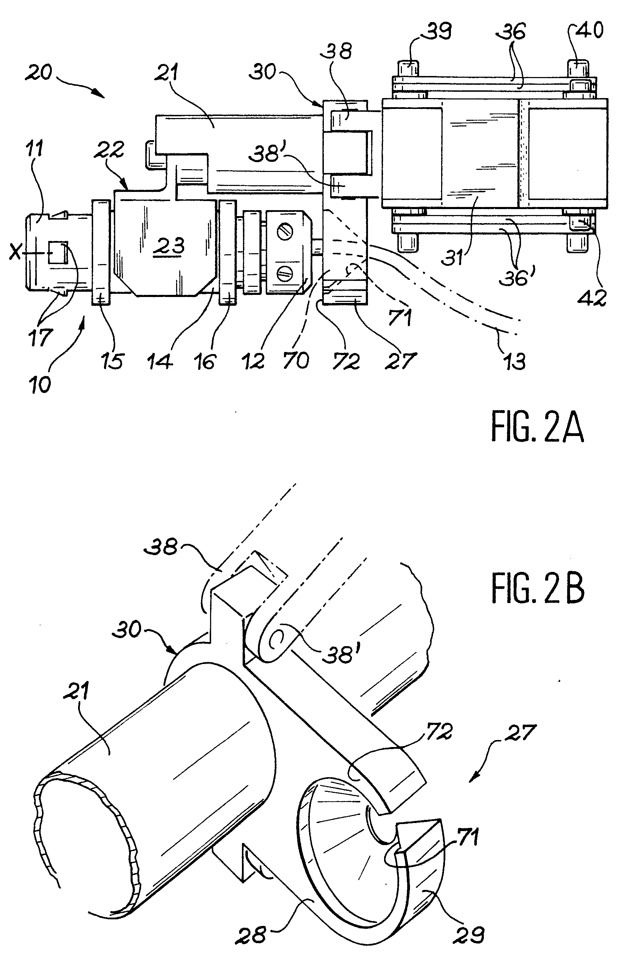

On se reporte tout d'abord à la figure 1. Le bras de télémanipulation est terminé par une pince 1 comprenant une partie fixe centrale 2, deux mors 3 et deux paires de biellettes 4 articulées chacune sur la partie centrale 2 et sur un mors 3 respectif. Les axes d'articulation des biellettes 4 sont parallèles. Les deux biellettes 4 articulées sur un même mors 3 restent parallèles, et leurs points d'articulation sur les mors 3 sont sur une ligne parallèle à la ligne tracée par leurs points d'articulation sur la partie centrale 2. Cette disposition permet d'éviter de faire tourner les mors 3 et les maintient donc parallèles. Le serrage se fait par rotation des paires de biellettes 4. Les mors 3 viennent alors saisir l'outil de préhension 20, qui apparaît également sur la figure 2, et que l'on va maintenant décrire en détail dans une position où il est prêt à saisir et serrer une fiche de connexion. Cette fiche, référencée généralement par 10, est de forme à peu près cylindrique d'axe longitudinal X ; une de ses extrémités 11, à gauche sur le dessin, correspond à la partie à enficher dans une embase, et à son autre extrémité 12 est accroché un câble souple 13 qui peut être suivant le cas électrique, pneumatique ou hydraulique. La fiche 10 comprend en outre entre ses extrémités une surface de préhension sensiblement cylindrique 14 qui peut être cylindrique de révolution ou prismatique et qui est limitée par deux épaulements avant 15 et arrière 16 pour en faciliter la saisie. Dans de nombreuses réalisations du commerce, cette surface de préhension 14 peut appartenir à une bague glissant longitudinalement sur la fiche 10 et dont le déplacement commande la rétractation ou la sortie d'ergots ou de cliquets 17 disposés près de l'extrémité avant 11 et qui sont utilisés pour le verrouillage sur l'embase.

L'outil de préhension 20 comprend tout d'abord un corps 21 cylindrique dont l'axe est, après mise en place, parallèle à et proche de l'axe X de la fiche 10 ; le corps 21 porte à une extrémité une fourche 22 constituée de deux mâchoires parallèles 23 et 24, s'étendant perpendiculairement à l'axe du corps 21, qui sont introduites de part et d'autre de la surface de préhension 14.

Un appendice 27 (figure 2B) en forme de crochet comprend un jambage vertical 28 qui se prolonge par une extrémité inférieure 29 légèrement recourbée pour présenter une concavité du côté du jambage 28. L'autre extrémité du jambage 28 est fixée à un palier 30 qui permet à l'appendice 27 de coulisser le long du corps cylindrique 21. Par ailleurs, le palier 30 est maintenu en rotation par rapport au corps cylindrique 21 pour obliger le jambage 28 à s'étendre parallèlement aux mâchoires 23 et 24. Il en résulte que, comme représenté figure 2A, il est possible et avantageux de disposer l'outil de préhension 20 avec le corps 21 en haut, horizontal et le jambage 28 et les mâchoires 23 et 24 orientés vers le bas pour glisser l'extrémité inférieure 29 de l'appendice 27 sous le câble 13 tout en plaçant les mâchoires 23 et 24 de part et d'autre de la surface de préhension 14. Le câble 13 est alors fermement soutenu dans la concavité de l'extrémité inférieure 29 et retenu par le jambage 28.

On remarque également que, suivant une conception avantageuse, le jambage 28 et l'extrémité 29 s'amincissent vers la fourche 22 et délimitent un oeil 70 (par lequel passe le câble 13) par une paroi conique 71.

Dans cette réalisation, la fourche 22 est par contre totalement fixée au corps 21.

L'outil de préhension 20 comprend également deux étriers 31 disposés latéralement et symétriquement par rapport au corps 21. Les étriers 31 comprennent des surfaces d'appui 32 que les mors 3 viennent serrer. Chacun des étriers 31 est relié à la fois au corps 21 et à l'appendice 27 au moyen d'un mécanisme 35 composé de trois biellettes 36, 37 et 38. Les trois biellettes 36, 37 et 38 sont articulées autour d'axes perpendiculaires au corps 21, ici verticaux. La première biellette 36 est articulée autour d'un axe avant d'étrier 39 et sur un axe arrière de corps 40 ; la deuxième biellette 37 est articulée sur un axe arrière d'étrier 42 et sur un axe avant de corps 43 ; la troisième biellette 38 sur l'axe avant d'étrier 39 et sur un axe d'appendice 44 disposé sur le palier 30 de l'appendice 27.

En se déplaçant sur l'outil de préhension 20 vers la fourche 22, on trouve successivement l'axe arrière d'étrier 42 et l'axe arrière de corps 40, puis l'axe avant de corps 43, l'axe avant d'étrier 39 et l'axe d'appendice 44. La première biellette 36 est donc croisée avec les deuxième et troisième biellettes 37 et 38. Elle est en outre de longueur plus importante : environ double ou triple.

Afin d'augmenter la robustesse de l'ensemble, on peut en outre multiplier ces biellettes 36, 37 et 38, par exemple en les dédoublant et en les plaçant parallèlement de part et d'autre des étriers 31 et du corps 21. C'est ce que fait apparaître la figure 2A, où des biellettes additionnelles 36' et 38' suivent exactement les déplacements des biellettes associées respectives 36 et 38.

L'outil de préhension 20 est mis en action par les mors 3, qui pressent les étriers 31 et les rapprochent l'un de l'autre, ce qui entraîne la rotation des biellettes 36, 37 et 38 (et éventuellement 36' et 38'), jusqu'à ce que les étriers 31 prennent la position représentée en tirets sur la figure 1, plus proche du corps 21. Les biellettes 36, 37 et 38 prennent ainsi une position plus parallèle au corps 21, ce qui signifie que le palier 30 est mis en mouvement et rapproche l'appendice 27 de la fourche 22. L'appendice 27 entre en contact avec l'extrémité arrière 12 de la fiche 10 et la repousse vers l'avant (à gauche sur les dessins), jusqu'à ce que l'épaulement arrière 16 vienne en butée contre la fourche 22. La fourche 22 et l'appendice 27 serrent alors la fiche 10 entre l'épaulement arrière 16 et l'extrémité arrière 12.

Dans le cas où l'oeil 70 est délimité par une paroi conique 71, l'extrémité 12 correspondante de la fiche 10 peut être serrée et centrée dans de meilleures conditions en s'appuyant sur cette paroi conique 71. Toutefois, l'extrémité 12 peut aussi s'appuyer sur une paroi plane 72 de l'appendice 27.

A condition de maintenir le serrage du mors 3, la fiche 10 peut donc être soulevée et manipulée pour être finalement enfichée par l'extrémité avant 11 dans l'embase non représentée. Le détrompage de la fiche 10, c'est-à-dire sa rotation autour de son axe X, est effectué par simple pivotement de la pince 1, et les efforts d'enfichage sont uniquement longitudinaux et n'impliquent que des porte-à-faux très réduits. De plus, les parties de la fiche 10 qui reçoivent l'effort de serrage et d'enfichage sont orientées normalement au déplacement : elles ne sont donc pas soumises à un frottement qui serait susceptible de les détériorer, pas plus qu'à des efforts obliques qui pourraient conduire à un retournement partiel de la fiche 10 en cours de manipulation.

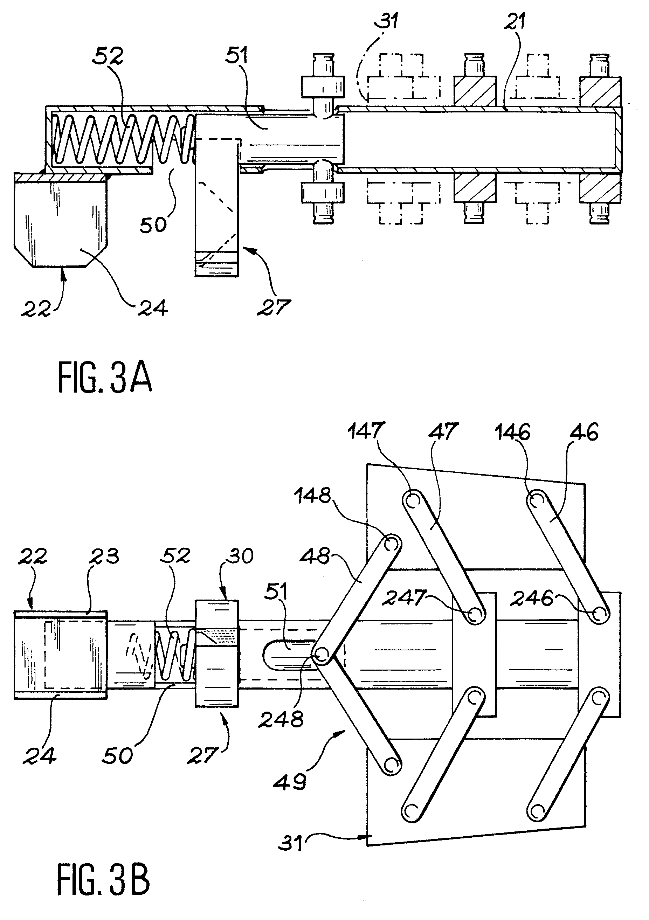

Quand l'enfichage a été effectué, les mors 3 s'écartent des étriers 31 ; un moyen de rappel composé par exemple d'un ressort longitudinal, placé comme le ressort 52 des figures 3 que l'on va aborder, ou d'un ressort transversal 45 disposé entre les étriers 31 et le corps 21 ramène alors l'outil de préhension 20 à son état initial, dans lequel les étriers 31 sont écartés et l'appendice 27 ramené en arrière, ce qui dégage la fiche 10 et permet finalement de retirer l'outil de préhension 20.

Dans une réalisation un peu différente schématisée figures 3A et 3B, le mécanisme 35 à biellettes 36, 37 et 38 (et éventuellement 36' et 38') est remplacé par un autre mécanisme 49 à biellettes 46, 47 et 48 disposées un peu différemment. Deux biellettes 46 et 47 sont de même longueur, parallèles et articulées sur un étrier 31 et le corps 21 autour d'axes situés suivant des lignes parallées, si bien que, comme pour les mors 3 de la pince 1, le serrage des étriers 31 déplace ceux-ci sans les tourner. Dans cette réalisation, l'axe d'articulation 146 ou 147 de chaque biellette 46 ou 47 situé sur le corps 21 est en arrière de l'axe d'articulation 246 ou 247 situé sur l'étrier 31 si bien que le serrage déplace les étriers 31 vers l'avant.

Une troisième biellette 48, située en avant des deux autres 46 et 47, est articulée en un axe arrière 148 sur un étrier 31 et en un axe avant 248 sur l'appendice 27. On constate qu'un serrage peu intense exerce ici un déplacement important sur l'appendice 27, ce qui distingue cette réalisation de la précédente.

Enfin, le corps 21 est creux et possède une ouverture 50 sur une partie de sa circonférence le long de la course prévue pour le palier 30. Le palier 30 est alors muni d'une portée 51 qui coulisse dans l'ouverture 50 et dans l'intérieur du corps 21 et qui sert comme butée à un ressort hélicoïdal de compression 52 utilisé comme moyen de rappel et qui est logé dans le corps 21, parallèlement à son axe et en avant de la portée 51.

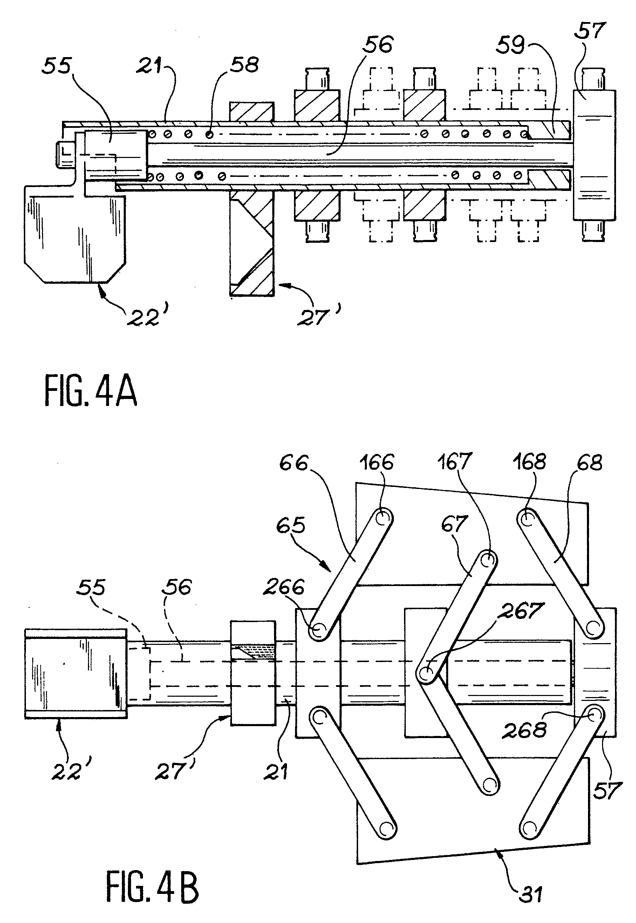

Une autre realisation équivalente est décrite d'aprés les figures 4A et 4B. Dans cette réalisation, l'appendice 27' est fixé sur le corps 21 et c'est la fourche 22' qui est mobile.

Elle est en effet fixée à un cylindre 55 qui coulisse dans le corps 21, qui est creux comme dans la réalisation précédente. Une tige 56 est placée dans le corps 21 et relie le cylindre 55 à une portée 57 qui dépasse à l'arrière du corps 21. Un ressort hélicoïdal de compression 58 est encore utilisé comme moyen de rappel ; il est placé autour de la tige 56 et comprimé entre le cylindre 55 et un épaulement 59 à l'arrière du corps 21.

Il existe encore un mécanisme 65 à trois biellettes pour chaque étrier 31. Deux biellettes 66 et 67 sont sensiblement parallèles et articulées à leurs extrémités sur le corps 21 et sur l'étrier 31. Pour chaque biellette 66 ou 67, l'axe d'articulation 266 ou 267 au corps 21 est en avant de l'axe d'articulation 166 ou 167 à l'étrier 31. Une troisième biellette 68 est articulée à son extrémité avant 168 sur un étrier 31 et à son extrémité arrière 268 sur la portée 57. Le serrage de l'étrier 31 s'accompagne donc d'un déplacement vers l'arrière, qui communique également un déplacement vers l'arrière à la portée 57 et à la fourche 22'. Le ressort de compression 58 ramène la fourche 22' à sa position initiale à l'issue du serrage.

L'outil selon l'invention permet donc de perfectionner très sensiblement du point de vue ergonomique les processus de télémanipulation de pièces telles que des fiches électriques ou des raccordements pneumatiques ou hydrauliques dont l'enfichage se fait par translation.

**Revendications**

1. Outil de préhension (20) d'une pièce (10) présentant une surface de préhension (14) circonférentielle limitée par un épaulement (16), notamment pour une fiche de connecteur de câble, caractérisé en ce qu'il comprend une fourche (22) venant coiffer la surface de préhension (14), un appendice (27) venant en face d'une portée (12) de la pièce (10), un corps (21) cylindrique le long duquel coulisse l'appendice (27), deux étriers (31) disposés latéralement de part et d'autre du corps, et deux mécanismes (35, 49) reliant l'appendice (27) et le corps (21) aux deux étriers (31), ces mécanismes (35, 49) permettant, sous l'action d'un moyen tel qu'une pince de télémanipulateur appuyant sur les deux étriers (31), de rapprocher lesdits étriers (31) tout en faisant coulisser l'appendice (27) sur le corps (21), et jusqu'a ce que l'appendice (27) atteigne la portée (12) de la pièce et la repousse, puis que l'épaulement (16) soit porté contre la fourche (22), la pièce (10) étant alors serrée entre ladite fourche (22) et l'appendice (27).

2. Outil de préhension (21) pour une pièce (10) présentant une surface de préhension (14) circonférentielle limitée par un épaulement (16), notamment pour une fiche de connecteur de câble, caractérisé en ce qu'il comprend une fourche (22') venant coiffer la surface de préhension (14), un appendice (27') venant en face d'une portée (12) de la pièce, un corps (21) cylindrique le long duquel coulisse la fourche (22'), deux étriers (31) disposés latéralement de part et d'autre du corps (21), et deux mécanismes (65) reliant la fourche (22') et le corps (21) aux deux étriers (31), ces mécanismes (65) permettant, sous l'action d'un moyen tel qu'une pince de télémanipulateur appuyant sur les deux étriers (31), de rapprocher lesdits étriers (31) tout en faisant coulisser la fourche (22') sur le corps (21), et jusqu'a ce que la fourche (22') atteigne l'épaulement (16) et le repousse, puis que la portée (12) de la pièce (20) soit portée contre l'appendice (27'), la pièce (20) étant alors serrée entre la fourche (22') et l'appendice (27').

3. Outil de préhension suivant la revendication 1, caractérisé en ce que les mécanismes (35, 49) comprennent chacun au moins deux biellettes (36, 37, 46, 47) articulées sur le corps (21) et sur un étrier (31) et une troisième biellette (38, 48) articulée sur ledit étrier (31) et l'appendice (27).

4. Outil de préhension suivant la revendication 2, caractérisé en ce que les mécanismes (65) comprennent chacun au moins deux biellettes (66, 67) articulées sur le corps (21) et sur un étrier, et une troisième biellette (68) articulée sur ledit étrier et la fourche (22').

5. Outil de préhension suivant l'une quelconque des revendications 1 à 4, caractérisé en ce que le mécanisme (35, 49, 65) comprend un moyen de rappel (45, 52, 58) le ramenant à un état où les étriers (311) sont écartés et la pièce (20) desserrée.

6. Outil de préhension suivant l'une quelconque des revendications 1 à 5, caractérisé en ce que l'appendice (27) est en forme de crochet et comprend un jambage vertical (28) désaxé par rapport à la pièce et une extrémité inférieure (29) pour recueillir et soutenir un câble (13) lié à la pièce (10).

7. Outil de préhension suivant la revendication 6, caractérisé en ce que le jambage (28) et l'extémité inférieure (29) de l'appendice (27) possèdent une paroi conique (71) pour atteindre et centrer la portée (12).

FIG. 1

FIG. 2A

FIG. 2B

FIG. 3A

FIG. 3B

FIG. 4A

FIG. 4 B

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | WO-A-8 602 589 (AMP INCORPORATED)<br>* Résumé *<br>--- | 1 | B 25 J 15/00 |
| A | DE-A-3 441 643 (SAADAT)<br>* Résumé *<br>--- | 3,4 | |
| A | US-A-4 599 036 (TARBUCK)<br>* Colonne 3, lignes 14-20 *<br>----- | 7 | |

**DOMAINES TECHNIQUES RECHERCHES (Int. Cl.4)**

B 25 J
G 21 F

Le présent rapport a été établi pour toutes les revendications

| Lieu de la recherche | Date d'achèvement de la recherche | Examinateur |
|---|---|---|
| LA HAYE | 01-02-1989 | LAMMINEUR P.C.G. |